**Europäisches Patentamt**

**European Patent Office**

**Office européen des brevets**

(19)

(11) **EP 1 271 683 A2**

(12) **EUROPÄISCHE PATENTANMELDUNG**

(43) Veröffentlichungstag:
02.01.2003 Patentblatt 2003/01

(51) Int Cl.⁷: **H01M 8/12**, H01M 4/86,
H01M 4/90

(21) Anmeldenummer: 02013964.8

(22) Anmeldetag: 25.06.2002

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **26.06.2001 DE 10130783**

(71) Anmelder: **BASF Aktiengesellschaft**
**67063 Ludwigshafen (DE)**

(72) Erfinder:
• **Weppner, Werner, Prof.Dr.**
**24226 Heikendorf (DE)**

• **Voigt, Ingolf, Dr.**
**07743 Jena (DE)**
• **Bitterlich, Stefan, Dr.**
**67246 Dirmstein (DE)**
• **Voss, Hartwig, Dr.**
**67227 Frankenthal (DE)**
• **Fischer, Andreas, Dr.**
**67056 Ludwigshafen (DE)**

(74) Vertreter: **Isenbruck, Günter, Dr. et al**
**Patent- und Rechtsanwälte,**
**Bardehle-Pagenberg-Dost-Altenburg-Geissler-I
senbruck**
**Theodor-Heuss-Anlage 12**
**68165 Mannheim (DE)**

(54) **Brennstoffzelle**

(57)    Die Erfindung bezieht sich auf eine Brennstoffzelle mit einer mittleren Betriebstemperatur, die eine Kathode, eine Anode und einen Elektrolyten umfasst, wobei mindestens die Kathode eine Material der Zusammensetzung $(Sr_{1-x}\,Ca_x)_{1-y}A_yMn_{1-z}B_zO_{3-\delta}$ enthält und

A    für mindestens ein Element der Gruppe Ba, Pb,
Na, K, Y, und der Lanthanidengruppe steht,
B    für mindestens ein Element der Gruppe Mg, Al,
Ga, In, Sn, und Nebengruppenelemente der 4.,
5. oder 6. Periode steht und
x    Werte von 0,2 bis 0,8 annimmt,

y    Werte von 0 bis 0,4 annimmt,
z    Werte von 0 bis <1 annimmt und
$\delta$    Werte annimmt, die sich unter Berücksichtigung des Elektroneutralitätsprinzips ergeben.

**EP 1 271 683 A2**

**Beschreibung**

Die vorliegende Erfindung betrifft eine Brennstoffzelle, insbesondere eine Festoxid-Brennstoffzelle.

Brennstoffzellen sind Energiewandler, die chemische Energie in elektrische Energie umwandeln. In einer Brennstoffzelle wird das Prinzip der Elektrolyse umgekehrt. Man kennt heute verschiedene Arten von Brennstoffzellen, die sich im allgemeinen in der Betriebstemperatur voneinander unterscheiden. Der Aufbau der Zellen ist aber prinzipiell bei allen Typen gleich. Sie bestehen im allgemeinen aus zwei Elektroden, einer Anode und einer Kathode, an denen die Reaktionen ablaufen, und einem Elektrolyten zwischen den beiden Elektroden. Dieser hat drei Funktionen. Er stellt den ionischen Kontakt her, verhindert den elektrischen Kontakt und sorgt außerdem für das Getrennthalten der den Elektroden zugeführten Gase. Die Elektroden werden in der Regel mit Gasen versorgt, die im Rahmen einer Redoxreaktion umgesetzt werden. Beispielsweise werden die Anode mit Wasserstoff und die Kathode mit Sauerstoff versorgt.

Die derzeit bekannten Typen von Brennstoffzellen lassen sich beispielsweise einteilen in solche, die bei relativ niedriger Temperatur ($\leq 200°C$) arbeiten, zum Beispiel die alkalische Brennstoffzelle, die Polymerelektrolyt-Brennstoffzelle und die Phosphorsäure-Brennstoffzelle und in solche, die im Mittel- und Hochtemperaturbereich (500 bis 1000°C) arbeiten.

Während die Niedertemperatur-Brennstoffzellen auf der Kathodenseite in den meisten Fällen Wasserstoff als Brenngas benötigen, können die im Mittel- und Hochtemperaturbereich arbeitenden Typen auch mit anderen Brenngasen (wie Methan oder Methanol) beaufschlagt werden, die im Anodenraum ablaufenden chemischen Reaktionen unterliegen, insbesondere der sogenannten internen Reformierung, bei der aus dem Brenngas Wasserstoff entsteht. Diese Eigenschaft stellt gegenüber den Niedertemperatur-Brennstoffzellen einen Vorteil dar, weil dadurch der sonst notwendige Aufwand für Herstellung und Reinigung des Wasserstoffs erheblich verringert wird oder gar gänzlich entfällt, sofern der verwendete Energieträger nicht elementarer Wasserstoff ist, sondern diesen in chemisch gebundener Form enthält.

Die Mittel- und Hochtemperatur-Brennstoffzellen sind in der Carbonatschmelzen-Brennstoffzelle (MCFC-Molten Carbonate Fuel Cell) und der Festoxid-Brennstoffzelle (SOFC-Solid Oxide Fuel Cell) verwirklicht. Die MCFC arbeitet bei Temperaturen um 650°C. Bei diesem Brennstoffzellentyp treten jedoch erhebliche Probleme durch Korrosion und Elektrolytverluste sowie durch unerwünschte Änderungen der Elektrolyteigenschaften während der Betriebsdauer auf. Bei der SOFC befindet sich im Anodenraum das Brenngas und im Kathodenraum ein sauerstoffhaltiges Gas (in der Regel Luft). An der Grenze zwischen Kathodenraum und Kathode wandelt sich Sauerstoff unter Zufuhr von Elektronen in Oxidionen um. Die Oxidionen wandern, getrieben durch den Gradienten der Sauerstoffaktivität, durch den oxidischen Elektrolyten und reagieren auf der Anodenseite unter Abgabe von Elektronen mit dem Brenngas. Da der Elektrolyt im wesentlichen nur für Oxidionen, nicht aber für Elektronen leitfähig ist, erfolgt der Ladungsausgleich über einen äußeren Stromkreis, was die Eignung des beschriebenen Prinzips für die Erzeugung elektrischer Energie begründet.

Die Elektroden haben also jeweils zwei Funktionen: An der Kathode muß die Umwandlung der Sauerstoffmoleküle in Oxidionen stattfinden und die Elektronen müssen zugeführt werden; an der Anode muß die Reaktion des Brenngases mit den Oxidionen stattfinden und die Elektronen müssen abgeführt werden.

Dies kann zum einen erreicht werden, indem die jeweilige Elektrode aus einem im wesentlichen elektronenleitenden Material (meist ein Metall) gefertigt wird, das als poröse Schicht auf den Elektrolyten aufgebracht wird. Die jeweilige Reaktion findet dann lediglich an der Dreiphasengrenze Gas-Elektronenleiter-Oxidionenleiter statt. Dies gilt auch für die in den gängigen Festoxid-Brennstoffzellen meist auf der Anodenseite verwendeten Verbundstrukturen aus metallischen und Oxidionen leitenden Materialien (sogenannten Cermets).

Zum anderen können aber als Elektrodenmaterialien auch sogenannte gemischtleitende keramische Materialien verwendet werden (siehe zum Beispiel US 4,751,152), die sowohl für Oxidionen als auch für Elektronen eine hohe Leitfähigkeit bzw. eine hohe Sauerstoffdiffusivität aufweisen. Derartige Materialien können porös oder als dichte Schicht auf den Elektrolyten aufgebracht werden. Die jeweilige Reaktion findet auf der gesamten Grenzfläche Gas-Elektrode statt. Insbesondere als Kathode sind oft gemischtleitende keramische Materialien gegenüber metallischen im Vorteil, weil letztere, als Kathode verwendet, eine hohe Oxidationsstabilität aufweisen müssen, was die Verwendung teurer Edelmetalle (zum Beispiel Platin) bedingt.

Die WO 99/33134 bezieht sich auf die Zusammensetzung einer Luftelektrode für eine Festoxid-Brennstoffzelle, die eine perowskitische Kristallstruktur mit der Formel $ABO_3$ aufweist, wobei A gemischte Lanthanide enthält und mit mindestens einem Element der Seltenen Erden und einem Element der Erdalkalimetalle dotiert ist und B Mn enthält und mit Mg, Al, Cr, Ni, Co oder Fe dotiert ist.

Die dem Stand der Technik entsprechende Festoxid-Brennstoffzelle (SOFC) arbeitet bei Temperaturen von ca. 950°C. Diese hohe Temperatur wirft erhebliche Probleme, vor allem werkstofftechnischer Art auf, die vor allem auf der Korrosion der verwendeten Materialien beruhen. Kritisch ist hierbei insbesondere die in Zellstapeln notwendige bipolare Platte, die sowohl unter reduzierenden als auch oxidierenden Bedingungen stabil sein muß.

Außerdem müssen Brennstoff und Verbrennungsluft auf sehr hohe Temperaturen vorgewärmt werden, um eine unzulässige thermische Belastung der Zellkeramik zu vermeiden. Ferner wird die optimale Nutzung der Abwärme in einer Kraft-Wärme-Kopplung erschwert.

Die genannten hohen Temperaturen sind bei der SOFC aber bislang notwendig, um eine ausreichende Leitfähigkeit des als Elektrolyt verwendeten oxidischen Materials für die den Ladungstransport bewirkenden Oxidionen sicherzustellen. Es ist zwar grundsätzlich möglich, den durch eine verringerte Leitfähigkeit des Elektrolytmaterials bewirkten erhöhten Widerstand der Elektrolytschicht dadurch zu kompensieren, dass die Dicke der Elektrolytschicht entsprechend verringert wird, jedoch muß dann mindestens eine der Elektroden verstärkt werden, um eine ausreichende mechanische Stabilität zu gewährleisten. Dies führt jedoch bei den beiden oben beschriebenen Elektrodentypen zu neuen Problemen; bei porösen Elektroden erhöht sich der Diffusionsweg vom Gasraum zur Dreiphasengrenze, was leistungsmindernde Diffusionsüberspannungen zur Folge hat (J.-W. Kim, A.Virkar, K.-Z. Fung, K. Metha, S.C. Singhal, J. Elektrochem. Soc. 146 (1999) 69). Im Falle einer Edelmetallelektrode verbietet sich eine Verstärkung aus Kostengründen. Die gemischtleitenden Materialien, die bislang als für Elektroden in Festoxid-Brennstoffzellen geeignet beschrieben werden, benötigen ebenfalls hohe Betriebstemperaturen, um für die technische Anwendung ausreichende Leitfähigkeiten bzw. Sauerstoffdiffusivitäten zu erreichen (B. C. H. Steele, Solid State Ionics, 134 (2000) 3-20).

Aufgabe der vorliegenden Erfindung ist es, eine Brennstoffzelle bereitzustellen, die bei Temperaturen unter 950°C arbeitet und bei der die dem Arbeitsprinzip heutiger Brennstoffzellen innewohnenden Nachteile vermeiden werden.

Diese Aufgabe wird erfindungsgemäß durch eine Brennstoffzelle mit einer mittleren Betriebstemperatur gelöst, die eine Kathode, eine Anode und einen Elektrolyten umfaßt, wobei mindestens die Kathode ein Material der Zusammensetzung $(Sr_{1-x} Ca_x)_{1-y} A_y Mn_{1-z} B_z O_{3-\delta}$ mit Perowskitstruktur enthält und

A   für mindestens ein Element der Gruppe Ba, Pb, Na, K, Y, und der Lanthanidengruppe steht,

B   für mindestens ein Element der Gruppe Mg, Al, Ga, In, Sn, und Nebengruppenelemente der 4., 5. oder 6. Periode steht und

x   Werte von 0,2 bis 0,8 annimmt,

y   Werte von 0 bis 0,4 annimmt,

z   Werte von 0 bis < 1 annimmt und

δ   Werte annimmt, die sich unter Berücksichtigung des Elektroneutralitätsprinzips ergeben.

Unter einer mittleren Betriebstemperatur ist dabei eine Temperatur zwischen 300 und 800°C zu verstehen, bevorzugt zwischen 400 und 700°C, besonders bevorzugt zwischen 500 und 650°C.

Einige Materialien der Zusammensetzung $(Sr_{1-x} Ca_x)_{1-y} A_y Mn_{1-z} B_z O_{3-\delta}$ sind in der DE-A 19 826 496 und in Labrincha, J.A., Irvine, J.T.S., Bol. Soc. Esp. Ceräm. Vidrio, 34 [5-6] 405-408 (1995) beschrieben, nicht jedoch ihr Einsatz als Kathodenmaterial in einer Brennstoffzelle.

Diese Materialien weisen bei Temperaturen, die weit unter 950°C liegen, einen hohen chemischen Diffusionskoeffizienten auf. Der chemische Diffusionskoeffizient entspricht dem Produkt aus Diffusivität (Komponentendiffusionskoeffizient) und dem sogenannten Wagner-Faktor. Der Wagner-Faktor W ist für einen Festkörper, in dem die elektrische Leitung im wesentlichen nur durch jeweils eine ionische und elektronische Spezies erfolgt, wie folgt definiert:

$$W = t_e \frac{\partial \ln a_i^*}{\partial \ln c_i^*}$$

mit $t_e$ der Überführungszahl der Elektronen, $a_i^*$ der Aktivität der neutralen Spezies des Ions und $c_i^*$ der Konzentration der neutralen Spezies des Ions.

Vorzugsweise steht B bei dem Material der vorliegenden Erfindung für mindestens eines der Elemente Vanadium, Niob oder Tantal. Das diese Elemente enthaltende Material weist einen hohen Wagner-Faktor und folglich einen hohen Diffusionskoeffizienten auf.

Bei einer bevorzugten Ausführungsform der vorliegenden Erfindung enthält mindestens die Kathode der erfindungsgemäßen Brennstoffzelle ein Material der Zusammensetzung $(Sr_{1-x} Ca_x)MnO_{3-\delta}$, wobei y und z die Werte 0 annehmen. Besonders bevorzugt ist dabei ein Wert von x zwischen 0,4 und 0,6, insbesondere das $Sr_{0,5}Ca_{0,5}MnO_{3-\delta}$ mit x = 0,5. Dieses Material weist überraschenderweise bereits bei einer Temperatur von ca. 300°C eine aus der Diffusivität (Komponentendiffusionskoeffizient) bestimmte Sauerstoffleitfähigkeit von $10^{-8}$ bis $10^{-6}$ S/cm$^2$ (im chemi-

schen Gleichgewicht) und eine elektrische Leitfähigkeit von $10^{-2}$ bis $10^{-1}$S/cm$^2$ (in Luft) auf. Die Diffusivität selbst liegt dabei etwa bei $10^{-6}$cm$^2$/s. Dies stellt eine wesentliche Verbesserung gegenüber im Stand der Technik bekannten perowskitischen Materialien des Typs LSMO (Lanthan-Strontium-Mangan-Oxid mit eventueller Dotierung, insbesondere der B-Plätze) dar, die chemische Diffusionskoeffizienten aufweisen, die um mindestens zwei Zehnerpotenzen unter denen des hier beschriebenen Calcium-Strontium-Mangan-Oxids liegen (A. Belzner, T.M. Gür und R.A. Huggins, Solid State Ionics 40/41, 535-538 (1990)). Entscheidend für die Eignung dieses Materials als Kathodenmaterial bei einer erfindungsgemäßen Brennstoffzelle ist aber vor allem der chemische Diffusionskoeffizient, der für dieses Material überraschend hoch ist. Er liegt bei 300°C bei etwa $10^{-6}$cm$^2$/s. Damit ist er mindestens zwei Zehnerpotenzen höher als bei dem genannten LSMO.

Bei einer bevorzugten Ausführungsform der vorliegenden Erfindung enthält der Elektrolyt mindestens einen festen Ionenleiter. Im allgemeinen wird in der SOFC das durch Dotierung mit Yttriumoxid (oder Calciumoxid) kubisch stabilisierte Zirkoniumoxid (YSZ) als Elektrolyt verwendet. Bei mittleren Temperaturen, bei denen die erfindungsgemäße Brennstoffzelle eingesetzt wird, haben jedoch einige andere feste Ionenleiter höhere Leitfähigkeiten. Vorzugsweise enthält der Elektrolyt bei der vorliegenden Erfindung mindestens ein Material aus der Gruppe TZP (Tetragonal Zirconia Polycrystals), SSZ (Scandiumoxid dotiertes kubisch stabilisiertes Zirkoniumoxid), LSGM (Lanthan-Strontium-Gallium-Magnesium-Oxid mit Perowskit-Struktur), CGO (Gadoliniumoxid dotiertes Cer-Oxid), BiCuVOx ($Bi_4V_{1,8}BiCu_{0,2}O_{10,7}$) und BiErOx [$(Bi_2O)_{0,8}(Er_2O_3)_{0,2}$]. Deren ionische Leitfähigkeiten σ sind in der folgenden Tabelle bei 500 und 600°C zusammengestellt:

| Ionenleiter | σ bei 500°C [S/cm] | σ bei 600°C [S/cm] | Referenz |
|---|---|---|---|
| YSZ | $2,8 \cdot 10^{-4}$ | $1,6 \cdot 10^{-3}$ | [1] |
| TZP | $7,9 \cdot 10^{-4}$ | $4,6 \cdot 10^{-3}$ | [2,3] |
| SSZ | $6,3 \cdot 10^{-3}$ | $1,6 \cdot 10^{-2}$ | [4] |
| LSGM | $7,1 \cdot 10^{-3}$ | $2,8 \cdot 10^{-3}$ | [5] |
| CGO | $1,6 \cdot 10^{-1}$ | $4 \cdot 10^{-2}$ | [6,7] |
| BiCuVOx | $3,2 \cdot 10^{-3}$ | $9 \cdot 10^{-2}$ | [8] |
| BiErOx | $2,2 \cdot 10^{-2}$ | $1,1 \cdot 10^{-2}$ | [7] |

Referenzen:

[1] T.H. Etsell, S.N. Flengas, Chem. Rev. 70, 339(1970)
[2] W. Weppner und H. Schubert, Adv. in Ceramics 24 (Science and Technology of Zirconia III), 837 (1988)
[3] W. Weppner, Solid State Ionics 52, 15 (1992)
[4] S.P.S. Badwal, J. Mater. Sci. 22, 4125 (1987); S.P.S. Badwal und J. Drennan, Solid State Ionics 53-56, 769 (1992)
[5] T. Ishihara, M. Honda, T. Shibayarna, H. Furutani und Y. Takita, Ionics 4, 395 (1998); T. Ishihara, H. Matsuda und Y. Takity, J. Am. Chem. Soc. 116, 3801 (1994)
[6] H. L. Tuller und A.S. Nowick, J. Electrochem. Soc. 122, 255 (1975)
[7] H. Inaba, H. Tagawa, Solid State Ionics 83, 1 (1996)
[8] E. Pernot, M. Anne, M. Bacmann, P. Strobel, J. Fouletier, R.N. Vannier, G. Mairesse, F. Abraham und G. Nowogrocki, Solid State Ionics 70/71, 259 (1994)

Wie aus der Tabelle ersichtlich, weisen vier dieser Verbindungen bereits bei Temperaturen von 600°C ionische Leitfähigkeiten von > $10^{-2}$S/cm auf. Entscheidend ist aber, wie bereits oben erwähnt, nicht der spezifische Widerstand (oder die spezifische Leitfähigkeit), sondern der tatsächliche Widerstand der Schicht. Die Elektrolytschicht hat vorzugsweise eine Dicke von 0,1 bis 100 µm, besonders bevorzugt von 1 bis 10 µm. Bei einer Schichtdicke von 10µm, die bei einem gemischtleitenden Elektrodenmaterial (wie erfindungsgemäß beschrieben) als Substrat gasdicht ausgeführt werden kann, ergibt sich mit einer Leitfähig-keit von $10^{-2}$S/cm ein flächenbezogener Widerstand von 0,1 Ωcm$^2$. Bei einem Strom von 1 A/cm$^2$ folgt daraus ein Verlust von i$^2$R = 0,1 W/cm$^2$. Das ist bei einer elektrischen Leistung von 1 W/cm$^2$, die bei einer Spannung von etwa 1 V mit der genannten Stromdichte erzielt werden kann, ein Leistungsverlust von lediglich 10%, bei einer ebenfalls technisch interessanten Stromdichte von 0,1 A/cm$^2$ sogar nur noch 1%. Wenn man die Dicke der Elektrolytschicht auf 1 µm reduziert, so erreicht man laut analoger Rechnung sogar unter Verwendung konventioneller und relativ preiswerter Materialien wie YSZ, die bei 500 bis 600°C Leitfähigkeiten von $10^{-3}$ bis $10^{-4}$S/cm aufweisen, technisch nutzbare Stromdichten bei Leistungsverlusten durch Ohm'schen Widerstand im Elektrolyten unter 10%.

Die festen Ionenleiter werden als Dünn- oder Dickschichten mit den im Stand der Technik üblichen Verfahren hergestellt, um den Widerstand möglichst kleinzuhalten. Die Elektrolytschicht kann auf das für die erfindungsgemäße Brennstoffzelle vorgeschlagene Kathodenmaterial aufgetragen werden, das damit gleichzeitig als Substrat dient (analog zur bekannten Siemens-Westinghouse-Rohrtechnologie, bei der jedoch poröses Kathodenmaterial als Substrat verwendet wird, um hinreichend hohe Diffusionsraten des Sauerstoffs zum Elektrolyten hin zu erzielen).

Bei einer weiteren bevorzugten Ausführungsform der vorliegenden Erfindung enthält der Elektrolyt einen oxidischen festen Protonenleiter, zum Beispiel Gd-dotiertes Bariumcerat ($BaCe_{1-x}Gd_xO_{3-\alpha}$) [N. Taniguchi, K. Hatoh, J. Niikura und T. Gamo, Solid State Ionics 53-56, 998 (1992)]. Bei derartigen Materialien kann in entgegengesetzter Richtung zum Transport von Protonen ein Transport von Wassermolekülen stattfinden. In diesem Fall reagiert an der Anode ein Kohlenstoff in elementarer und/oder chemisch gebundener Form enthaltendes Brenngas mit durch den Elektrolyt diffundiertem Wasser unter Bildung von Wasserstoff zu einem Gasgemisch, das außerdem im wesentlichen Kohlenmonoxid und/oder Kohlendioxid enthält. Der Wasserstoff gibt unter Bildung von Protonen Elektronen ab und wandert durch den Elektrolyten zur Kathode. An der Grenzfläche Elektrolyt/Kathode reagieren die Protonen mit durch das Kathodenmaterial herantransportierten Oxidionen unter Bildung von Wasser, das wiederum zur Anodenseite wegdiffundiert. Ist die Kathode in der Weise ausgeführt, daß eine Dreiphasengrenze Kathodenmaterial/Elektrolyt/Kathodengas vorliegt, also daß sie vom Gasraum bis zum Elektrolyten durchgängige Poren aufweist, so kann ein Teil des gebildeten Wasserdampfes auch in den Kathodenraum übertreten.

Für die Anode wird ein Material verwendet, das im angestrebten Temperaturbereich einerseits eine ausreichende elektrische Leitfähigkeit aufweist und andererseits eine schnelle chemische Reaktion der durch die Elektrolytschicht transportierten Ionen mit dem Brenngas sicherstellt. Vorzugsweise enthält das Anodenmaterial mindestens eine katalytische Komponente.

Diese katalysiert

- die Umsetzung von Oxidionen mit Wasserstoff unter Bildung von Wasser und/oder

- die Umsetzung von Oxidionen mit kohlenstoffhaltigen Verbindungen unter Bildung von u.a. CO und/oder $CO_2$ und/oder

- die Umsetzung von Wasser mit kohlenstoffhaltigen Verbindungen unter Bildung von u.a. Wasserstoff oder (unter gleichzeitiger Abgabe von Elektronen) von Protonen.

Dies kann beispielsweise verwirklicht werden, indem die Anode aus einem im wesentlichen Elektronen leitenden Material ausgeführt wird. Bei einer bevorzugten Ausführungsform der vorliegenden Erfindung enthält die Anode ein elektrisch leitendes oxidkeramisches Material oder ein Metall. Als Metall ist vorzugsweise Nickel oder ein Edelmetall wie Platin, Ruthenium oder Palladium oder Legierungen dieser Metalle enthalten. Die Anode kann als poröse Schicht auf dem Elektrolyten aufgebracht sein. Die jeweilige Reaktion findet dann an der Dreiphasengrenze Brenngas-Elektrolyt-Oxidionenleiter statt.

Bei einer weiteren bevorzugten Ausführungsform der vorliegenden Erfindung enthält die Anode Verbundstrukturen aus metallischen und Oxidionen leitenden Materialien. Dazu zählen zum Beispiel solche, die eines der als für den Elektrolyten geeigneten Materialien oder Gemische dieser Materialien enthalten, zusammen mit einem im wesentlichen Elektronen leitenden Material. Ein im wesentlichen Elektronen leitendes Material ist in diesem Zusammenhang ein Elektronen leitendes oxidkeramisches Material oder ein Metall. Als Metall kann beispielsweise Nickel oder ein Edelmetall wie Platin, Ruthenium oder Palladium oder Legierungen mit diesen Metallen enthalten sein. Derartige Strukturen können auch vorteilhaft unter Verwendung sogenannter nanostrukturierter Festelektrolyte, wie sie in WO 98/19351 beschrieben werden, hergestellt werden. Die Anodenreaktion findet dann an der Dreiphasengrenze Brenngas-Elektronenleiter-Oxidionenleiter statt, weshalb Anoden aus derartigen Materialien vorzugsweise porös auszuführen sind. Ein Beispiel hierfür sind Mischungen aus CGO und La-Sr-Co-Fe-Oxid.

Bei einer weiteren bevorzugten Ausführungsform der vorliegenden Erfindung enthält die Anode ein gemischtleitendes Material mit katalytisch wirksamen Bestandteilen. Die katalytische Aktivität des Anodenmaterials im oben erwähnten Sinne wird dabei durch die Zumischung der katalytisch wirksamen Bestandteile erhöht. Beispiele hierfür sind Srdotiertes Lanthanmanganoxid $LaMnO_3$ (LSM) oder Samarium-dotiertes Ceroxid (SDC), denen jeweils mikrokristalline Pt- und Ru-Partikel beigemischt werden (M. Watanabe et al., J. Electrochem.Soc. 141 (1994) 342 ff.).

Vorzugsweise bildet die Anode bei der vorliegenden Erfindung eine poröse Schicht auf dem Elektrolyten. Die Porosität der Anode soll adäquat für den Gastransport sein. Vorteilhaft sind dazu Elektroden, die 50 bis 85% der vollen theoretischen Dichte aufweisen, also 15 bis 50% Porosität. Die Dicke der Elektroden beträgt bei der vorliegenden Erfindung vorzugsweise 0,01 μm bis 1 mm.

Zwischen Anoden- und Elektrolytschicht sowie zwischen Kathoden- und Elektrolytschicht können sich auch zwecks Stabilisierung der jeweiligen Schichten Zwischenschichten, vorzugsweise aus oxidischen Materialien, befinden. Natürlich müssen derartige Zwischenschichten geeignete ionisch-elektrische Leitungseigenschaften aufweisen. Unter geeigneten ionisch-elektrischen Leitungseigenschaften versteht man dabei, daß die Zwischenschichten keine Sperrschichten zwischen den Elektroden und dem Elektrolyten bilden, sondern der jeweils angrenzenden Elektrode oder dem Elektrolyten ähnliche ionisch-elektrische Leitungseigenschaften aufweisen.

Ferner läßt sich die Brennstoffzelle auch in der Weise aufbauen, daß alle Schichten (Anode, Elektrolyt und Kathode) im wesentlichen einheitlich das als mindestens für die Kathode erfindungsgemäß beschriebene Material enthalten. Die für die Brennstoffzelle beanspruchten perowskitischen Materialien weisen nämlich zum Teil bei mittleren Sauerstoffpartialdrucken überwiegende Ionenleitfähigkeit auf. Es lassen sich deshalb mit diesen Materialien Brennstoffzellen aus einer einzigen Komponente herstellen, wie es prinzipiell von Weppner beschrieben wurde (EP-A 0 190 605), wobei gegebenenfalls die gasberührten Schichten noch mit Dotierungen durch Fremdelemente versehen werden müssen. Der Vorteil besteht darin, daß keine separaten Materialien für die Elektroden benötigt werden und die Hemmung des Transports der Ionen durch Fest-/Fest-Grenzflächen entfällt. Die elektronische Leitung kommt in diesem Falle durch die an Anode und Kathode vorliegenden Sauerstoffpartialdrucke zustande. Auf der Kathodenseite ist das Material p-leitend, auf der Anodenseite ist das Material n-leitend. Weiterhin kann durch geeignete Verfahren wie sukzessiver Beschichtung gezielt ein Gradient in der Zusammensetzung erzeugt werden, welcher zu den vorangehend beschriebenen Funktionalitäten (Kathode-Elektrolyt-Anode) in den verschiedenen Zonen der Gesamtschicht führt.

Die Herstellung der vorangehend beschriebenen Schichten kann in dem Fachmann bekannter Weise erfolgen, zum Beispiel durch Sol-Gel-Technik, Schlickertechnik, Chemical Vapour Deposition (CVD), thermisches Spritzen, Drucktechniken, wobei gegebenenfalls ein thermischer Nachbehandlungsschritt anzuschließen ist.

Die vorangehend beschriebenen Schichten können auch zwecks Erhöhung der mechanischen Stabilität auf einem porösen Träger, insbesondere aus Metall, aufgebracht sein, der, wenn er elektrisch leitend ist, gleichzeitig als Stromkollektor dienen kann.

Die wie bis hierher beschrieben aufgebauten Einzelzellen können zwecks Erzeugung technisch verwertbarer elektrischer Spannungen in einer dem Fachmann bekannten Weise in Reihe geschaltet werden, zum Beispiel in Form eines Zellstapels mit bipolaren Platten oder durch Ineinanderstecken von Rohrsegmenten.

Die gegebenenfalls notwendige Vorwärmung der in die Brennstoffzelle bzw. den Apparat eintretenden Gase und die Wärmeabfuhr aus den die Brennstoffzelle bzw. den Apparat verlassenden Gasen kann ebenfalls in dem Fachmann bekannter Weise erfolgen, also zum Beispiel durch einen Wärmetausch zwischen zu- und abgeführtem Gas. Das abgeführte Anodengas kann, sofern es noch einen geeigneten Restanteil an brennbaren Komponenten enthält, in einer Nachverbrennung unter Gewinnung von mechanischer und/oder Wärmeenergie eingesetzt werden, zum Beispiel in Heizkraftwerken.

Die erfindungsgemäße Brennstoffzelle dient zur Erzeugung elektrischer Energie bei Temperaturen in der Brennstoffzelle von 300 bis 800°C, insbesondere bei 500 bis 600°C. Als Brenngas können Wasserstoff, Kohlenmonoxid, Methan, eine oder mehrere organische Verbindungen oder eine Mischung aus den genannten Komponenten verwendet werden. Mögliche organische Verbindungen sind dabei Kohlenwasserstoffe oder Alkohole.

Ferner bezieht sich die vorliegende Erfindung auf die Verwendung einer erfindungsgemäßen Brennstoffzelle für die Erzeugung von elektrischer Energie und/oder Wärme in einer ortsfesten Einheit oder in Personen- oder Nutzfahrzeugen, Flugzeugen oder U-Booten. In den Personen- oder Nutzfahrzeugen, den Flugzeugen oder U-Booten kann dabei die elektrische Energie als Antriebs- und/oder Hilfsenergie dienen.

**Patentansprüche**

1. Brennstoffzelle mit einer mittleren Betriebstemperatur, die eine Kathode, eine Anode und einen Elektrolyten umfasst, wobei mindestens die Kathode ein Material der Zusammensetzung $(Sr_{1-x} Ca_x)_{1-y}A_yMn_{1-z}B_zO_{3-\delta}$ enthält und

   A     für mindestens ein Element der Gruppe Ba, Pb, Na, K, Y, und der Lanthanidengruppe steht,

   B     für mindestens ein Element der Gruppe Mg, Al, Ga, In, Sn, und Nebengruppenelemente der 4., 5. oder 6. Periode steht und

   x     Werte von 0,2 bis 0,8 annimmt,

   y     Werte von 0 bis 0,4 annimmt,

   z     Werte von 0 bis <1 annimmt und

   δ     Werte annimmt, die sich unter Berücksichtigung des Elektroneutralitätsprinzips ergeben.

2. Brennstoffzelle gemäß Anspruch 1, **dadurch gekennzeichnet, daß** y und z den Wert 0 annehmen.

**3.** Brennstoffzelle gemäß Anspruch 1 oder 2, **dadurch gekennzeichnet, daß** x Werte von 0,4 bis 0,6 annimmt

**4.** Brennstoffzelle gemäß einem der Ansprüche 1 bis 3, **dadurch gekennzeichnet, daß** B für mindestens eines der Elemente Vanadium, Niob oder Tantal steht.

**5.** Brennstoffzelle gemäß einem der Ansprüche 1 bis 4, **dadurch gekennzeichnet, daß** die Betriebstemperatur 400 bis 700°C, vorzugsweise 500 bis 650°C beträgt

**6.** Brennstoffzelle gemäß einem der Ansprüche 1 bis 5, **dadurch gekennzeichnet, daß** der Elektrolyt ein Material gemäß einem der Ansprüche 1 bis 4, einen oxidischen Oxidionenleiter oder einen oxidischen festen Protonenleiter enthält.

**7.** Brennstoffzelle gemäß einem der Ansprüche 1 bis 6, **dadurch gekennzeichnet, daß** der Elektrolyt mindestens ein Material aus der Gruppe TZP (Tetragonal Zirconia Polycrystals), SSZ (Scandiumoxid dotiertes kubisch stabilisiertes Zirkoniumoxid), LSGM ( Lanthan-Strontium-Gallium-Magnesium-Oxid mit Perowskit-Struktur), CGO (Gadoliniumoxid dotiertes Ceroxid), BiCuVOx ($Bi_4V_{1,8}BiCu_{0,2}O_{10,7}$) und BiErOx [$(Bi_2O)_{0,8}(Er_2O_3)_{0,2}$] enthält.

**8.** Brennstoffzelle gemäß einem der Ansprüche 1 bis 7, **dadurch gekennzeichnet, daß** die Anode ein elektrisch leitendes oxidkeramisches Material oder ein Metall enthält.

**9.** Brennstoffzelle gemäß einem der Ansprüche 1 bis 8, **dadurch gekennzeichnet, daß** die Anode Verbundstrukturen aus metallischen und Oxidionen leitenden Materialien oder ein gemischtleitendes Material mit katalytisch wirksamen Bestandteilen enthält.

**10.** Brennstoffzelle gemäß einem der Ansprüche 1 bis 9, **dadurch gekennzeichnet, daß** die Anode eine poröse Schicht auf dem Elektrolyten bildet.